# FASCICULE DE BREVET EUROPEEN

(11) **EP 4 281 321 B1**
(45) Date de publication et mention de la délivrance du brevet: **17.09.2025**
(21) Numéro de dépôt: 22701591.4
(22) Date de dépôt: 21.01.2022
(51) Int. Cl.: B60Q 1/076, B60Q 1/08, F21S 41/143, F21S 41/153, F21S 41/657, F21S 41/663

(54) **SYSTÈME D'ÉCLAIRAGE DE VÉHICULE AUTOMOBILE MUNI D'UN MODULE LUMINEUX APTE À ÉMETTRE UN FAISCEAU LUMINEUX PIXÉLISÉ**
KRAFTFAHRZEUGBELEUCHTUNGSSYSTEM MIT EINEM BELEUCHTUNGSMODUL ZUR EMISSION EINES PIXELIERTEN LICHTSTRAHLS
MOTOR VEHICLE ILLUMINATION SYSTEM PROVIDED WITH A LIGHTING MODULE ABLE TO EMIT A PIXELLATED LIGHT BEAM

(30) Priorité: 22.01.2021 FR 2100601
(43) Date de publication de la demande: 29.11.2023
(73) Titulaire: Valeo Vision, 93012 Bobigny Cedex (FR)
(72) Inventeur: DREZET, Matthieu, 93012 BOBIGNY (FR); ROELS, Sebastien, 93012 BOBIGNY (FR); PELLARIN, Marie, 49000 ANGERS (FR)
(74) Mandataire: Valeo Visibility
(86) Numéro de dépôt international: PCT/EP2022/051404
(87) Numéro de publication internationale: WO 2022/157339

(56) Documents cités:
- WO-A1-2019/103349
- FR-A1- 3 079 467
- FR-A1- 3 082 471
- US-A1- 2018 099 605

## Description

L'invention concerne le domaine de l'éclairage automobile. Plus précisément, l'invention concerne un système d'éclairage de véhicule automobile muni d'un module lumineux apte à émettre un faisceau lumineux pixélisé.

Dans le domaine de l'éclairage automobile, il est connu d'employer des modules lumineux comportant suffisamment de sources lumineuses activables sélectivement, dites élémentaires, associé à un dispositif optique, pour permettre la réalisation de fonctions lumineuses pixélisées, par exemple contenant au moins 500 pixels, chaque pixel étant formé par un faisceau lumineux élémentaire émis par l'une des sources lumineuses élémentaires. Ce type de module permet par exemple de réaliser notamment des fonctions d'éclairage de type route anti-éblouissement, dans laquelle certains pixels du faisceau route sont éteints ou atténués au niveau d'un véhicule cible suivi ou croisé, de type écriture au sol dans laquelle certains pixels d'un faisceau de croisement sont sur-intensifiés ou atténués pour afficher un pictogramme, de type marquage au sol dans laquelle certains pixels du faisceau de croisement sont sur-intensifiés ou atténués pour matérialiser des marquages comme des lignes ou encore de type scénario d'accueil dans laquelle certains pixels d'un faisceau lumineux destiné à être projeté au sol ou sur un mur sont sur-intensifiés ou atténués pour afficher un pictogramme lors du déverrouillage et/ou du démarrage du véhicule.

Afin de contrôler ce type de module, un calculateur central reçoit des informations de différents capteurs comme une caméra filmant la route, un capteur d'angle au volant, ou un système de navigation, détermine quel type de fonction lumineuse pixélisée doit être émise par le module, et envoie périodiquement une instruction d'émission de cette fonction souhaitée au module. Les instructions envoyées par le calculateur contiennent généralement le type de fonction et les paramètres associés, comme par exemple la position d'un véhicule à ne pas éblouir. Un contrôleur, à chaque réception d'une instruction d'émission, définit, pour chaque source lumineuse élémentaire, quelle intensité de lumière cette source lumineuse doit émettre pour que le faisceau élémentaire qu'elle est susceptible d'émettre réalise le pixel nécessaire à la réalisation de la fonction lumineuse pixélisée souhaitée.

Un inconvénient de ce type de module lumineux est la zone d'émission sur la route qu'il est capable d'adresser. En effet, la résolution et les dimensions de cette zone d'émission sont directement liées au nombre de sources lumineuses élémentaires que ce module lumineux emploie. Afin de conserver une complexité optique, électronique et mécanique raisonnable ainsi qu'un coût acceptable, il est ainsi nécessaire de limiter les dimensions de cette zone d'émission. Pour autant, l'emplacement sur la route de la zone d'émission nécessaire pour la réalisation des différentes fonctions lumineuses qui sont citées ci-dessus, voire pour la réalisation d'une même fonction selon différents paramètres de circulations, varie. C'est à cet effet qu'il a été imaginé, comme par exemple décrit dans le document DE 10 2016 122 043, de venir régler l'orientation verticale du module lumineux en même temps que la fonction lumineuse pixélisée qu'il émet. On peut ainsi atteindre différentes zones d'émission en changeant l'orientation verticale du module lumineux.

Si cette solution présente des avantages indéniables, elle n'est pas satisfaisante du point de vue de l'intégration du module lumineux dans un projecteur d'un véhicule automobile.

En effet, un tel module lumineux n'est généralement pas utilisé seul mais en combinaison avec d'autres modules d'éclairage, et notamment un module d'éclairage susceptible d'émettre un faisceau d'éclairage présentant une coupure supérieure plate. La combinaison de ces deux modules permet, entre autres, de réaliser une fonction de type croisement réglementaire, en contrôlant le module lumineux pour l'émission d'une fonction lumineuse pixélisée présentant également une coupure supérieure. Or, si on vient modifier l'orientation verticale de ce module lumineux, on vient ainsi modifier la distribution lumineuse du faisceau globale émis par les deux modules lumineux, laquelle est susceptible de ne pas remplir les exigences réglementaires d'un faisceau de croisement.

Des systèmes d'éclairage de véhicule automobile sont également décrits dans les documents WO 2019/103349 A et FR 3079467 A.

Il existe ainsi un besoin pour un système d'éclairage de véhicule automobile intégrant un premier module lumineux susceptible d'émettre un faisceau d'éclairage présentant une coupure supérieure et un deuxième module lumineux susceptible d'émettre un faisceau d'éclairage pixélisé dont il soit possible de régler l'orientation verticale tout en conservant la capacité du système d'éclairage à émettre des fonctions lumineuses réglementaire.

La présente invention se place dans ce contexte et vise à répondre à ce besoin.

A ces fins, l'invention a pour objet un système d'éclairage d'un véhicule automobile, comprenant un premier module lumineux apte à émettre un premier faisceau d'éclairage à coupure supérieure, un deuxième module lumineux apte à émettre un deuxième faisceau d'éclairage pixélisé, un système de réglage mécanique de l'orientation verticale des premier et deuxième faisceaux lumineux et un contrôleur apte à recevoir une instruction d'émission d'une fonction lumineuse donnée et agencé pour contrôler le système de réglage pour entrainer une modification simultanée de l'orientation verticale des premier et deuxième faisceaux d'éclairage en fonction de ladite instruction et pour contrôler le deuxième module lumineux pour émettre un deuxième faisceau d'éclairage pixélisé présentant des caractéristiques prédéterminées en fonction de ladite instruction.

Selon l'invention, le premier module lumineux est apte à émettre un deuxième faisceau d'éclairage pixélisé dans une zone d'émission, la position de la zone d'émission étant ainsi définie par l'orientation verticale du deuxième faisceau d'éclairage. En d'autres termes, la modification simultanée de l'orientation verticale des premier et deuxième faisceaux d'éclairage, permet de déplacer simultanément, d'une part, la position de la coupure supérieure du premier faisceau d'éclairage et, d'autre part, la zone d'émission du deuxième faisceau d'éclairage pixélisé. Il est alors possible de définir, simultanément à ces déplacements, les caractéristiques du deuxième faisceau d'éclairage pixélisé pour prendre en compte à la fois la position de cette coupure supérieure et de cette zone d'émission, notamment afin que le faisceau global, formé par la réunion des premier et deuxième faisceaux d'éclairage, satisfasse aux exigences réglementaires encadrant la réalisation de ladite fonction lumineuse donnée.

On entend par faisceau lumineux pixélisé un faisceau composé d'une pluralité de pixels agencés en une pluralité de lignes et/ou de colonnes. Ce faisceau présente une résolution définie notamment en fonction des dimensions de chaque pixel et de la dimension de la zone d'émission associée à ce faisceau. Avantageusement, le premier faisceau d'éclairage peut être un premier faisceau d'éclairage pixélisé ou non. Le cas échéant, la résolution du deuxième faisceau d'éclairage pixélisé, notamment sa résolution verticale et/ou sa résolution horizontale, peut être supérieure à celle du premier faisceau d'éclairage. Par exemple, la coupure supérieure du premier faisceau d'éclairage est une coupure sensiblement plate.

Avantageusement, les premier et deuxième modules lumineux peuvent être agencés de sorte que le deuxième faisceau d'éclairage pixélisé recouvre, au moins partiellement, le premier faisceau d'éclairage, notamment de sorte que la zone d'émission du deuxième faisceau d'éclairage s'étende au-dessous et au-dessus de la coupure supérieure du premier faisceau d'éclairage. Le deuxième faisceau d'éclairage pixélisé peut ainsi réaliser différentes fonctions, et notamment, de façon alternative ou cumulative :
a. Une fonction d'éclairage de type croisement pour laquelle les pixels du deuxième faisceau d'éclairage sont contrôlés pour former une partie d'une coupure supérieure du faisceau global formé par la réunion des premier et deuxième faisceaux d'éclairage, une portion de cette coupure supérieure étant alignée ou non avec la coupure supérieure du premier faisceau d'éclairage, la coupure supérieure du deuxième faisceau d'éclairage formant ainsi, seule ou en combinaison avec la coupure supérieure du premier faisceau d'éclairage, une coupure de type croisement réglementaire ;
b. Une fonction d'éclairage de type route non éblouissant pour laquelle des pixels du deuxième faisceau d'éclairage, situés au-dessus de la coupure supérieure du premier faisceau d'éclairage, sont contrôlés pour former une zone sombre dans le faisceau global formé par la réunion des premier et deuxième faisceaux d'éclairage, le reste des pixels restant allumés,
c. Une fonction d'écriture au sol pour laquelle des pixels du deuxième faisceau d'éclairage, situés en-dessous de la coupure supérieure du premier faisceau d'éclairage et situés dans une zone d'affichage, sont contrôlés pour matérialiser un pictogramme ou un marquage au sol, par exemple par contraste négatif ou positif, dans le faisceau global formé par la réunion des premier et deuxième faisceaux d'éclairage.

Selon l'invention, le système d'éclairage peut comporter un calculateur apte à émettre des instructions d'émission d'une fonction lumineuse donnée, par exemple en fonction de paramètres de circulation du véhicule automobile, et notamment sa vitesse et/ou la présence d'usagers de la route à ne pas éblouir, notamment détectés par un système de capteur du véhicule automobile. Le cas échéant, ladite instruction pourra comporter un type de fonction lumineuse à émettre, et éventuellement une position d'une zone d'affichage d'un pictogramme ou d'un marquage sur la route et/ou une position d'une zone sombre anti-éblouissement.

Avantageusement, à la réception de création de ladite instruction d'émission d'une fonction lumineuse donnée, le contrôleur peut être agencé pour générer une image numérique réalisant une portion de ladite fonction lumineuse donnée dans un cadre dont les dimensions et la résolution correspondent à celles de la zone d'émission du deuxième faisceau d'éclairage pixélisé. Le cas échéant, le contrôleur est agencé pour contrôler le deuxième module lumineux pour l'émission du deuxième faisceau d'éclairage pixélisé, dans la zone d'émission, correspondant à l'image numérique générée, par allumage/extinction/contrôle de l'intensité lumineuse de chacune des sources lumineuses élémentaires du deuxième module lumineux pour que le faisceau d'éclairage élémentaire que cette source émet reproduise le pixel associé sur la route.

Dans un mode de réalisation de l'invention, le premier module lumineux et le deuxième module lumineux sont montés sur une même platine de support, le système de réglage mécanique comportant un actionneur relié à ladite platine de support et apte à provoquer un déplacement de la platine support, le contrôleur étant agencé pour contrôler, en fonction de ladite instruction, ledit actionneur pour entrainer un déplacement de la platine entrainant une modification simultanée de l'orientation verticale des premier et deuxième faisceaux d'éclairage. On entend par déplacement de la platine support une rotation et/ou une translation de la platine support permettant une modification de l'orientation verticale des premier et deuxième faisceaux d'éclairage. Le cas échéant, le contrôleur est agencé pour déterminer, à partir de ladite instruction d'émission d'une fonction lumineuse donnée reçue, une consigne de déplacement angulaire vertical de l'orientation verticale des premier et deuxième faisceaux d'éclairage et pour contrôler le système de réglage mécanique à partir de cette consigne de déplacement angulaire vertical. Selon ces caractéristiques, il est ainsi possible de simplifier l'intégration des deux modules dans un même système d'éclairage, en mutualisant un même actionneur pour le réglage de l'orientation vertical des faisceaux d'éclairage.

Dans un autre mode de réalisation de l'invention, le système de réglage mécanique comportant un premier actionneur, relié au premier module lumineux et apte à provoquer un déplacement du premier module lumineux, et un deuxième actionneur, relié au deuxième module lumineux et apte à provoquer un déplacement du deuxième module lumineux, le contrôleur étant agencé pour contrôler, en fonction de ladite instruction, les premier et deuxième actionneurs, notamment de façon synchrone, pour entrainer un déplacement simultané des premier et deuxième modules lumineux entrainant une modification simultanée de l'orientation verticale des premier et deuxième faisceaux d'éclairage.

Avantageusement, le contrôleur est agencé pour contrôler, en fonction de ladite instruction, le premier module lumineux pour modifier l'intensité lumineuse du premier faisceau d'éclairage selon une consigne prédéterminée en fonction de ladite instruction. Par exemple, le contrôleur peut être agencé pour déterminer, à partir de ladite instruction d'émission d'une fonction lumineuse donnée reçue, une consigne d'intensité lumineuse du premier faisceau d'éclairage, par exemple en pourcentage de l'intensité lumineuse nominale de ce premier faisceau d'éclairage, et pour contrôler le premier module lumineux pour l'émission du premier faisceau d'éclairage selon cette consigne d'intensité lumineuse.

Avantageusement, le deuxième module lumineux est apte à émettre un deuxième faisceau d'éclairage pixélisé dans une zone d'émission, et le contrôleur est agencé pour contrôler, en fonction de ladite instruction, le deuxième module lumineux pour émettre un faisceau d'éclairage pixélisé dont le profil, la photométrie et/ou la position dans la zone d'émission est prédéterminé en fonction de ladite instruction. Comme expliqué précédemment, la zone d'émission présente des dimensions constantes et une résolution constante, seule sa position sur la route étant modifiée par le déplacement mécanique du deuxième module lumineux. Par exemple, le contrôleur pourra être agencé pour contrôler, en fonction de ladite instruction, le deuxième module lumineux de sorte à mettre en œuvre l'une ou plusieurs des opérations suivantes, de façon séquentielle ou simultanée :
a. Modifier les dimensions verticale et/ou horizontale du deuxième faisceau d'éclairage dans la zone d'émission,
b. Ajouter, supprimer, déplacer et/ou modifier la forme, les dimensions et/ou la position d'une coupure supérieure du deuxième faisceau d'éclairage dans la zone d'émission,
c. Ajouter, supprimer, déplacer et/ou modifier la forme, les dimensions et/ou la position d'une zone sombre dans le deuxième faisceau d'éclairage dans la zone d'émission,
d. Ajouter, supprimer, déplacer et/ou modifier la forme, les dimensions et/ou la position d'un pictogramme et/ou d'un marquage au sol dans le deuxième faisceau d'éclairage dans la zone d'émission,
e. Augmenter ou diminuer une intensité lumineuse, locale ou globale, du deuxième faisceau d'éclairage dans la zone d'émission.

Dans un mode de réalisation de l'invention, le contrôleur est par exemple apte à recevoir sélectivement au moins une instruction d'émission d'un faisceau d'éclairage de type route non éblouissant, une instruction d'émission d'un faisceau d'éclairage de type croisement et une instruction d'émission d'un faisceau d'éclairage de type urbain. Le cas échéant :
a. Lors de la réception d'une instruction d'émission d'un faisceau d'éclairage de type route non éblouissant, le contrôleur est agencé pour contrôler le système de réglage pour entrainer une modification simultanée de l'orientation verticale des premier et deuxième faisceaux d'éclairage, de sorte que la coupure supérieure du premier faisceau d'éclairage soit positionnée sensiblement selon un angle de -0,57° par rapport à une ligne d'horizon ;
b. Lors de la réception d'une instruction d'émission d'un faisceau d'éclairage de type croisement, le contrôleur est agencé pour contrôler le système de réglage pour entrainer une modification simultanée de l'orientation verticale des premier et deuxième faisceaux d'éclairage, de sorte que la coupure supérieure du premier faisceau d'éclairage soit positionnée sensiblement selon un angle de -1,57° par rapport à une ligne d'horizon ;
c. Lors de la réception d'une instruction d'émission d'un faisceau d'éclairage de type urbain, le contrôleur est agencé pour contrôler le système de réglage pour entrainer une modification simultanée de l'orientation verticale des premier et deuxième faisceaux d'éclairage, de sorte que la coupure supérieure du premier faisceau d'éclairage soit positionnée sensiblement selon un angle de -2,57° par rapport à une ligne d'horizon.

Dans les exemples cités ci-dessus, la position de la coupure supérieure s'entend notamment lorsque le premier faisceau d'éclairage est projeté sur un écran vertical positionné à une distance suffisamment éloignée du premier module lumineux au regard de ces dimensions, par exemple de 25 mètres. Par ailleurs, ces exemples ont été listés à titre indicatif, d'autres fonctions pouvant être envisagées sans sortir du cadre de la présente invention et notamment des fonctions de type éclairage pour autoroute ou éclairage pour des conditions météorologiques défavorables.

Selon un exemple, lors de la réception d'une instruction d'émission d'un faisceau d'éclairage de type route non éblouissant, le contrôleur peut être, en outre, agencé pour contrôler le premier module lumineux pour l'émission du premier faisceau d'éclairage selon une consigne d'intensité lumineuse de 100% et pour contrôler le deuxième module lumineux pour l'émission d'un deuxième faisceau d'éclairage pixélisé comprenant une coupure supérieure, ledit deuxième faisceau d'éclairage pixélisé s'étendant horizontalement seulement partiellement dans la zone d'émission, et la coupure supérieure du deuxième faisceau d'éclairage présentant une première portion sensiblement plate alignée avec la coupure supérieure, notamment sensiblement plate, du premier faisceau d'éclairage et une deuxième portion sensiblement plate positionnée au-dessus de la coupure supérieure, les première et deuxième portions étant reliées par un ressaut, notamment oblique.

Dans un exemple alternatif, lors de la réception d'une instruction d'émission d'un faisceau d'éclairage de type route non éblouissant, le contrôleur peut être, en outre, agencé pour contrôler le deuxième module lumineux pour l'émission d'un deuxième faisceau d'éclairage pixélisé s'étendant horizontalement et verticalement dans la totalité de la zone d'émission et comprenant une zone sombre, par exemple encadrant un objet cible à ne pas éblouir.

Selon un exemple, lors de la réception d'une instruction d'émission d'un faisceau d'éclairage de type croisement, le contrôleur peut être agencé pour contrôler le premier module lumineux pour l'émission du premier faisceau d'éclairage selon une consigne d'intensité lumineuse comprise entre 50% et 100% et pour contrôler le deuxième module lumineux pour l'émission d'un deuxième faisceau d'éclairage pixélisé comprenant une coupure supérieure, ledit deuxième faisceau d'éclairage pixélisé s'étendant horizontalement totalement dans la zone d'émission, et la coupure supérieure du deuxième faisceau d'éclairage présentant une première portion sensiblement plate positionnée au-dessus de la coupure supérieure du premier faisceau d'éclairage et une deuxième portion sensiblement plate positionnée au-dessus de la première portion, les première et deuxième portions étant reliées par un ressaut, notamment oblique.

Selon un exemple, lors de la réception d'une instruction d'émission d'un faisceau d'éclairage de type urbain, le contrôleur peut être agencé pour contrôler le premier module lumineux pour l'émission du premier faisceau d'éclairage selon une consigne d'intensité lumineuse de 50% et pour contrôler le deuxième module lumineux pour l'émission d'un deuxième faisceau d'éclairage pixélisé comprenant une coupure supérieure sensiblement plate, ledit deuxième faisceau d'éclairage pixélisé s'étendant horizontalement totalement dans la zone d'émission, et la coupure supérieure du deuxième faisceau d'éclairage étant positionnée au-dessus de la coupure supérieure, notamment sensiblement plate, du premier faisceau d'éclairage.

Avantageusement, lorsque le contrôleur contrôle le deuxième module lumineux pour l'émission d'un deuxième faisceau d'éclairage pixélisé, dit initial, présentant une coupure supérieure et reçoit une instruction d'émission d'une nouvelle fonction lumineuse donnée, le contrôleur peut être agencé pour contrôler le deuxième module lumineux pour l'émission d'un deuxième faisceau d'éclairage pixélisé présentant une coupure supérieure dont la position reste constante et identique à celle du deuxième faisceau d'éclairage pixélisé initial pendant qu'il contrôle le système de réglage pour entrainer une modification simultanée de l'orientation verticale des premier et deuxième faisceaux d'éclairage en fonction de ladite instruction.

Par exemple, le contrôleur pourra être agencé pour contrôler le deuxième module lumineux pour provoquer un déplacement de ladite coupure supérieure dans le deuxième faisceau d'éclairage pixélisé dans une direction opposée à celles des déplacements des premier et deuxième faisceaux lumineux dues au système de réglage mécanique, notamment de sorte que la position et/ou la vitesse de déplacement de cette coupure supérieure soit asservie à la position et/ou à la vitesse de déplacement de ces faisceaux. On comprend que le déplacement de la coupure supérieure est ici un déplacement digital, et non mécanique, pouvant par exemple être mis en œuvre par la génération d'une séquence d'images numériques par le contrôleur pour contrôler le deuxième module lumineux pendant le contrôle du système de réglage et dans laquelle la position de cette coupure supérieure évolue inversement aux déplacements des faisceaux d'éclairage. Grâce à cette caractéristique, on s'assure que la position de la coupure supérieure reste constante sur la route, de sorte à éviter de sortir des plages de tolérance prévues réglementairement et à éviter de rendre le déplacement de cette coupure supérieure perceptible pour le conducteur, ce qui pourrait le perturber.

En variante, on pourra prévoir que cette coupure supérieure évolue avec une vitesse et/ou une direction de déplacement différente de celles des premier et deuxième faisceaux d'éclairage ou encore avec un déphasage temporel par rapport aux déplacements de ces premier et deuxième faisceaux d'éclairage.

Avantageusement, lorsque le contrôleur contrôle le deuxième module lumineux pour l'émission d'un deuxième faisceau d'éclairage pixélisé, dit initial, et reçoit une instruction d'émission d'une nouvelle fonction lumineuse donnée, notamment définissant un nouveau deuxième faisceau d'éclairage pixélisé, dit final, le contrôleur est agencé pour contrôler le deuxième module lumineux pour l'émission d'un deuxième faisceau d'éclairage pixélisé à partir d'une image numérique obtenue par une morphose et/ou une translation d'une image numérique correspondant au deuxième faisceau d'éclairage pixélisé initial, pendant qu'il contrôle le système de réglage pour entrainer une modification simultanée de l'orientation verticale des premier et deuxième faisceaux d'éclairage en fonction de ladite instruction. De préférence, ladite morphose et/ou ladite translation de l'image numérique pourra être une morphose et/ou une translation vers une image numérique correspondant au deuxième faisceau d'éclairage pixélisé final. Ces caractéristiques permettent, entre autres, d'éviter une modification brusque du faisceau global émis par le système d'éclairage qui serait perceptible pour le conducteur.

Avantageusement, lors de la réception d'une instruction d'émission d'une fonction lumineuse donnée, le contrôleur peut être agencé pour contrôler ,en fonction de ladite instruction, le système de réglage pour entrainer une modification simultanée de l'orientation verticale des premier et deuxième faisceaux d'éclairage selon une loi de commande présentant une vitesse variable. Par exemple, la loi de commande pourra définir une accélération pendant un premier intervalle de temps, dit temps de montée, puis une vitesse constante pendant un deuxième intervalle de temps, puis une décélération pendant un troisième intervalle de temps, dit temps de descente. Ces caractéristiques permettent également, de façon alternative ou cumulative, d'éviter une modification brusque du faisceau global émis par le système d'éclairage qui serait perceptible pour le conducteur.

Selon un exemple de réalisation de l'invention, le premier module lumineux comporte au moins une source lumineuse, un collecteur avec une surface réfléchissante configurée pour collecter et réfléchir les rayons lumineux émis par la source lumineuse en un faisceau lumineux suivant un axe optique du module, un dispositif optique, notamment une lentille, configuré pour projeter le faisceau lumineux, le dispositif optique étant configuré pour former une image de la surface réfléchissante du collecteur et présentant un foyer, notamment une ligne de foyer, situé à l'arrière du collecteur, de manière à imager essentiellement le bord arrière de sa surface réfléchissante, la coupure supérieure du premier faisceau d'éclairage étant réalisée par ce bord arrière.

Dans un autre exemple de réalisation de l'invention, le premier module lumineux comporte au moins une source lumineuse, un collecteur configuré pour collecter et réfléchir les rayons lumineux émis par la source lumineuse en un faisceau lumineux suivant un axe optique du module, un dispositif optique, notamment une lentille, configuré pour projeter le faisceau lumineux et un cache agencé entre le collecteur et le dispositif optique et présentant un bord de coupure, le dispositif optique présentant un foyer, notamment une ligne de foyer, situé au niveau du bord de coupure , de manière à imager essentiellement le bord de coupure, la coupure supérieure du premier faisceau d'éclairage étant réalisée par ce bord de coupure.

Selon un exemple de réalisation de l'invention, le deuxième module lumineux est agencé de sorte que le deuxième faisceau lumineux pixélisé soit un faisceau lumineux comprenant une pluralité de pixels, par exemple 500 pixels de dimensions comprises entre 0,05° et 0,3°, répartis selon une pluralité de lignes et de colonnes, par exemple 20 lignes et 25 colonnes. Par exemple, le deuxième module lumineux peut comporter une pluralité de sources lumineuses élémentaire et un dispositif optique agencés pour émettre ensemble ledit deuxième faisceau lumineux pixélisé. Le cas échéant, le contrôleur peut être agencé pour contrôler sélectivement chacune des sources lumineuses élémentaires du deuxième module lumineux pour que cette source lumineuse émette un faisceau lumineux élémentaire formant l'un des pixels du faisceau lumineux pixélisé. On entend par source lumineuse toute source de lumière éventuellement associée à un élément électro-optique, capable d'être activée et contrôlée sélectivement pour émettre un faisceau lumineux élémentaire dont l'intensité lumineuse est contrôlable. Il pourra notamment s'agir d'une puce à semi-conducteur émettrice de lumière, d'un élément émetteur de lumière d'une diode électroluminescente pixélisée monolithique, d'une portion d'un élément convertisseur de lumière excitable par une source de lumière ou encore d'une source de lumière associée à un cristal liquide ou à un micro-miroir.

L'invention a également pour objet un procédé de contrôle d'un système d'éclairage selon l'une des revendications précédentes, le procédé comportant les étapes suivantes :
a. Réception d'une instruction d'émission d'une fonction lumineuse donnée :
b. Contrôle du système de réglage pour entrainer une modification simultanée de l'orientation verticale des premier et deuxième faisceaux d'éclairage en fonction de ladite instruction ;
c. Contrôle du deuxième module lumineux pour émettre un deuxième faisceau d'éclairage pixélisé présentant des caractéristiques prédéterminées en fonction de ladite instruction.

La présente invention est maintenant décrite à l'aide d'exemples uniquement illustratifs et nullement limitatifs de la portée de l'invention, et à partir des dessins annexés, dessins sur lesquels les différentes figures représentent :
[Fig.1] représente, schématiquement et partiellement, un système d'éclairage selon un mode de réalisation de l'invention ;
[Fig.2] représente, schématiquement et partiellement, un procédé de contrôle du système d'éclairage de la [Fig.1] ;
[Fig.3] représente, schématiquement et partiellement, une première fonction lumineuse réalisée par le système d'éclairage de la [Fig.1] contrôlé au moyen du procédé de la [Fig.2] ;
[Fig.4] représente, schématiquement et partiellement, une deuxième fonction lumineuse réalisée par le système d'éclairage de la [Fig.1] contrôlé au moyen du procédé de la [Fig.2] ; et
[Fig.5] représente, schématiquement et partiellement, une deuxième fonction lumineuse réalisée par le système d'éclairage de la [Fig.1] contrôlé au moyen du procédé de la [Fig.2].

Dans la description qui suit, les éléments identiques, par structure ou par fonction, apparaissant sur différentes figures conservent, sauf précision contraire, les mêmes références.

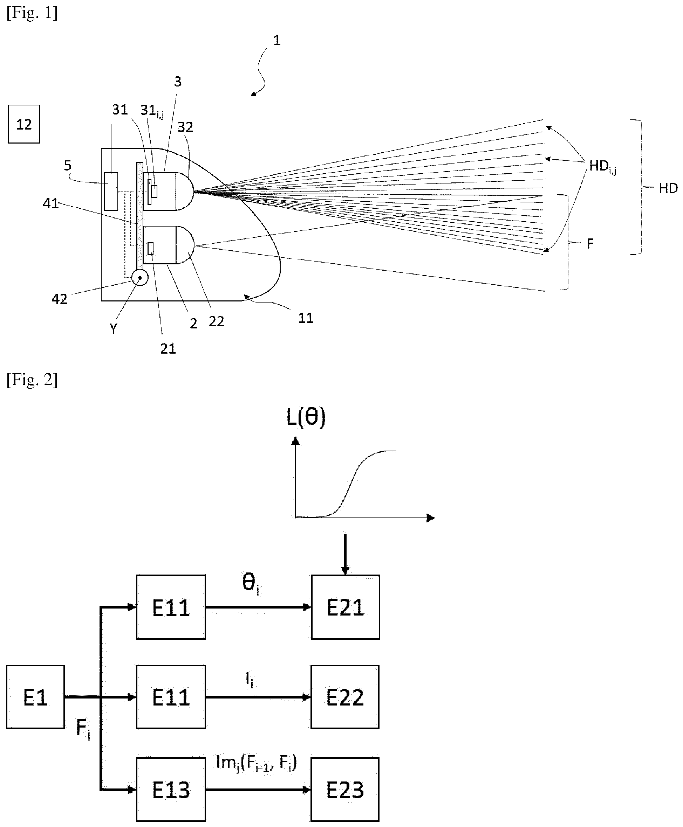

On a représenté en [Fig.1] une vue partielle d'un système d'éclairage 1 d'un véhicule automobile selon un mode de réalisation de l'invention.

Le système d'éclairage 1 comporte un projecteur 11 dans lequel est agencé un premier module lumineux 2 comprenant une source lumineuse 21 et un dispositif optique 22, le premier module 2 étant apte à émettre un premier faisceau d'éclairage F présentant une coupure sensiblement plate.

Le projecteur 11 comporte un deuxième module lumineux 3. Le module lumineux 3 comporte notamment une source de lumière pixélisée 31 associée à une lentille 32. Dans l'exemple décrit, la source lumineuse pixélisée 31 est une diode électroluminescente pixélisée monolithique dont chacun des éléments émetteurs de lumière forme une source lumineuse élémentaire 31_{i,j} pouvant être activée et contrôlée sélectivement par un contrôleur intégré pour émettre de la lumière vers la lentille 32, qui projette ainsi sur la route un faisceau lumineux élémentaire HD_{i,j} dont l'intensité lumineuse est contrôlable. Chaque faisceau lumineux élémentaire HD_{i,j} est projeté par la lentille dans un cône d'émission donné, défini par une direction d'émission donnée et une ouverture angulaire donnée. Ainsi, dans l'exemple décrit, l'ensemble des faisceaux lumineux élémentaires HD_{i,j} forme ainsi un deuxième faisceau d'éclairage pixélisé HD présentant 500 pixels répartis sur 25 colonnes et 20 lignes, s'étendant dans une zone d'émission ZE définie horizontalement par une plage angulaire de 7,5° et verticalement par une plage verticale angulaire de 6° et dont chaque pixel est formé par l'un de ces faisceaux lumineux élémentaires HD_{i,j}. Chaque faisceau lumineux élémentaire HD_{i,j} émis par l'une des sources lumineuses élémentaires 31_{i,j} de la source 31 présente une ouverture horizontale et verticale inférieure à 1°, par exemple de 0,3°.

Dans l'exemple décrit, le premier faisceau d'éclairage F est un faisceau non pixélisé, et les premier et deuxième modules lumineux 2 et 3 sont agencés de sorte que la zone d'émission ZE du deuxième faisceau lumineux HD s'étende au-dessous et au-dessus de la coupure plate du premier faisceau lumineux F.

Le premier module lumineux 2 et le deuxième module lumineux 3 sont montés sur une même platine de support 41 montée mobile en rotation dans le projecteur 11 autour d'un axe horizontal Y. Le projecteur 11 comporte un système de réglage mécanique comportant un actionneur 42 relié à ladite platine de support 41 et capable d'entrainer une rotation de la platine de support 41 autour de l'axe Y. On comprend que, lorsque la platine de support 41 pivote autour de l'axe Y, l'orientation verticale des premier et deuxième faisceaux d'éclairage F et HD est alors modifiée simultanément.

Le système d'éclairage 1 comporte un calculateur 12 du véhicule automobile, recevant différentes données, notamment issues de différents systèmes de capteur du véhicule automobile, comme notamment la vitesse du véhicule automobile ou encore la présence d'usagers de la route en aval du véhicule automobile. Le calculateur 12 est agencé pour émettre, en fonction de ces données reçues, des instructions d'émission d'une fonction lumineuse donnée, par le projecteur 11.

Le projecteur 11 comporte un contrôleur 5, recevant les instructions émises par le calculateur 12. Ce contrôleur 5 est agencé pour déterminer, à partir d'une instruction d'émission d'une fonction lumineuse donnée reçue du calculateur 12, une consigne angulaire de l'orientation verticale des faisceaux d'éclairage F et HD et une consigne d'intensité lumineuse du premier faisceau d'éclairage F. Le contrôleur 5 est également agencé pour générer, en fonction de cette instruction reçue, une image numérique réalisant une portion de ladite fonction lumineuse donnée dans un cadre dont les dimensions et la résolution correspondent à celles de la zone d'émission ZE du deuxième faisceau d'éclairage pixélisé HD.

Le contrôleur 5 est ainsi agencé pour contrôler l'actionneur 42 pour entrainer une rotation de la platine 42 selon la consigne angulaire déterminée, de sorte à entrainant une modification simultanée de l'orientation verticale des premier et deuxième faisceaux d'éclairage F et HD vers cette consigne.

Le contrôleur 5 est également agencé pour contrôler l'émission par le premier module lumineux 2 du premier faisceau d'éclairage F selon la consigne d'intensité lumineuse déterminée.

Le contrôleur 5 est également agencé pour envoyer l'image numérique générée au contrôleur intégré de la source lumineuse pixélisée 31. Ce contrôleur intégré contrôle alors sélectivement chacune des sources lumineuses élémentaires 31_{i,j} pour l'allumage, l'extinction et/ou la modification de l'intensité lumineuse du faisceau lumineux élémentaire HD_{i,j} que cette source est susceptible d'émettre, de sorte que ce faisceau d'éclairage élémentaire reproduise le pixel de l'image numérique associé à cette source sur la route. Le deuxième faisceau d'éclairage pixélisé HD reproduit ainsi l'image numérique générée dans la zone d'émission ZE.

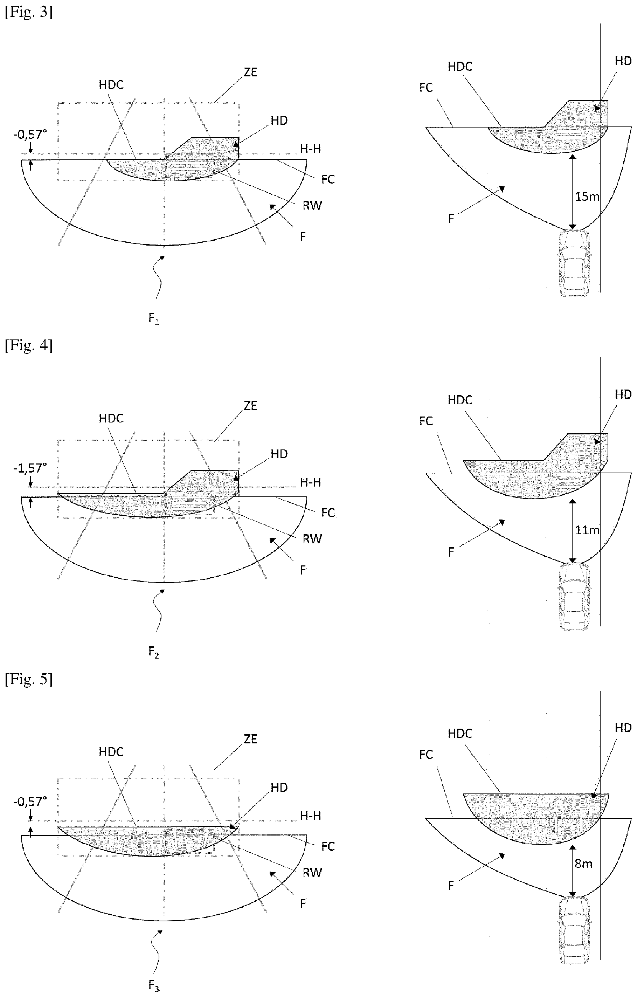

On a représenté en [Fig.2] un procédé de commande du système d'éclairage 1 selon un mode de réalisation de l'invention. Ce procédé va être décrit, en lien avec les [Fig.3] et [Fig.4] et [Fig.5] qui décrivent chacune, à gauche, une projection sur un écran des faisceaux d'éclairage F et HD émis par le projecteur 11 et, à droite, une vue de dessus d'une scène de route, pour trois fonctions lumineuses différentes réalisées lors de la mise en œuvre du procédé de la [Fig.2].

Dans une étape E1, le calculateur 12 génère, à partir de données reçues, une instruction d'émission d'une fonction lumineuse donnée Fᵢ. Dans l'exemple de la [Fig.3], il s'agit d'une fonction F₁ d'éclairage de type route anti-éblouissant dans un mode croisement devant être émise lorsque la vitesse du véhicule est supérieure à 60 km/h et qu'un nombre important d'usagers de la route à ne pas éblouir ont été détectés. Il est à noter que dans le cas de la [Fig.3], l'instruction d'émission de la fonction F₁ requiert en plus la génération, dans une zone d'écriture au sol RW, de deux bandes blanches horizontales matérialisant un avertissement un risque de collision avec un obstacle situé en aval du véhicule automobile. Dans l'exemple de la [Fig.4], il s'agit d'une fonction F₂ d'éclairage de type croisement devant être émise lorsque la vitesse du véhicule est comprise entre 30 km/h et 60 km/h et qu'au moins un usager de la route à ne pas éblouir a été détecté. L'instruction d'émission de la fonction F₂ requiert en plus la génération, dans une zone d'écriture au sol RW, de trois bandes blanches horizontales matérialisant un avertissement un risque de collision avec un obstacle situé en aval du véhicule automobile. Enfin, dans le cas de la [Fig.5], il s'agit d'une fonction F₃ d'éclairage de type urbain devant être émise lorsque la vitesse du véhicule est inférieure à 30 km/h. L'instruction d'émission de la fonction F₃ requiert en plus la génération, dans une zone d'écriture au sol RW, de deux bandes blanches verticales matérialisant un gabarit du véhicule automobile permettant au conducteur de réaliser une manœuvre avec précision. Il est à relever que les fonctions citées ci-dessus sont listées à titre indicatif, et que le calculateur 12 pourra générer des instructions d'émission d'autres types de fonctions lumineuses par le projecteur 11.

Le contrôleur 5 détermine, dans une étape E11, à partir de l'instruction d'émission de la fonction Fᵢ, une consigne angulaire θᵢ de l'orientation verticale des faisceaux d'éclairage F et HD permettant de réaliser la fonction Fᵢ. Puis, dans une étape E21 ; le contrôleur 5 contrôle l'actionneur 42 du système de réglage pour entrainer une rotation de la platine 41 autour de l'axe Y et modifier l'orientation verticale des premier et deuxième faisceaux d'éclairage F et HD vers cette consigne angulaire θᵢ. Dans les exemples décrits, les consignes angulaires θᵢ définissent la position de la coupure sensiblement plate FC du premier faisceau d'éclairage F par rapport à une ligne d'horizon H-H et sont respectivement de -0.57° pour la fonction d'éclairage de type route anti-éblouissant dans un mode croisement de la [Fig.3], de -1,57° pour la fonction d'éclairage de type croisement de la [Fig.4] et de -2,57° pour la fonction d'éclairage de type urbain de la [Fig.5].

En d'autres termes, lorsque le calculateur 12 requiert, par exemple, l'émission d'une fonction F₂ d'éclairage de type croisement, alors que le projecteur 11 émet la fonction F₁ d'éclairage de type route anti-éblouissant dans un mode croisement, comme montré en [Fig.3], le contrôleur 5 détermine la valeur de la consigne angulaire θ₂, à savoir - 1,57°, et commande l'actionneur 42 pour entrainer une modification de l'orientation verticale des faisceaux d'éclairage F et HD de -1°. Cette modification se traduit par une baisse de 1° de la coupure FC du premier faisceau d'éclairage F et par un repositionnement de -1° de la zone d'émission ZE du deuxième faisceau d'éclairage pixélisé HD, comme montré en [Fig.4]. Du point de vue du conducteur, la zone d'émission ZE se rapproche ainsi de 4 mètres vers le véhicule automobile.

De même, lorsque le calculateur 12 requiert, par exemple, l'émission d'une fonction F₃ d'éclairage de type urbain, alors que le projecteur 11 émet une fonction F₂ d'éclairage de type croisement, comme montré en [Fig.4], le contrôleur 5 détermine la valeur de la consigne angulaire θ₃, à savoir -2,57°, et commande l'actionneur 42 pour entrainer une modification de l'orientation verticale des faisceaux d'éclairage F et HD de -1°. Cette modification se traduit par une baisse de 1° de la coupure FC du premier faisceau d'éclairage F et par un repositionnement de -1° de la zone d'émission ZE du deuxième faisceau d'éclairage pixélisé HD. Du point de vue du conducteur, la zone d'émission ZE se rapproche ainsi de 3 mètres vers le véhicule automobile.

Dans l'étape E21, la modification de l'orientation verticale des premier et deuxième faisceaux d'éclairage est réalisée selon une loi de commande L(θ) définissant une consigne de vitesse de déplacement des faisceaux d'éclairage F et HD entre leur orientation verticale initiale θᵢ₋₁ et ladite consigne angulaire θᵢ. Dans l'exemple décrit, la loi de commande L(θ) est telle que la platine 41 pivote, en début de course, selon une accélération progressive, puis avec une vitesse constante, et, en fin de course, selon une décélération progressive.

Simultanément, le contrôleur 5 détermine, dans une étape E12, une consigne d'intensité lumineuse Iᵢ du premier faisceau d'éclairage F permettant de réaliser la fonction Fᵢ. Puis, dans une étape E22 ; le contrôleur 5 contrôle le premier module lumineux 2, et plus précisément sa source lumineuse 21, pour que l'intensité lumineuse du premier faisceau d'éclairage F soit conforme à cette consigne Iᵢ. Dans les exemples décrits, les consignes d'intensité lumineuses Iᵢ sont déterminées en pourcentage de l'intensité lumineuse nominale susceptible d'être émise par la source lumineuse 21, et sont respectivement de 100% pour la fonction d'éclairage de type route anti-éblouissant dans un mode croisement de la [Fig.3], de 75% pour la fonction d'éclairage de type croisement de la [Fig.4] et de 50% pour la fonction d'éclairage de type urbain de la [Fig.5].

De façon également simultanée, dans une étape E13, le contrôleur 5 génère une séquence d'images numériques Imⱼ(Fᵢ₋₁,Fᵢ) permettant au deuxième faisceau d'éclairage pixélisé HD de transiter de la fonction lumineuse Fᵢ₋₁ précédemment émise à la nouvelle fonction Fᵢ.

Plus précisément, la séquence d'images numériques Imⱼ(Fᵢ₋₁,Fᵢ) est générée de sorte que, d'une part, la position d'une coupure supérieure HDC dans le deuxième faisceau d'éclairage HD définie pour la fonction lumineuse Fᵢ₋₁ reste sensiblement constante pendant la modification de l'orientation verticale des premier et deuxième faisceaux d'éclairage F et HD de l'étape E21. A ces fins, la position de la coupure HDC définie dans chaque image numérique Imⱼ(Fᵢ₋₁,Fᵢ) générée par le contrôleur 5 se voit déplacée par rapport à la position de la coupure HDC définie dans l'image numérique Imⱼ₋₁(Fᵢ₋₁,Fᵢ ) précédemment générée, dans une direction opposée à celle de la modification de l'orientation verticale déterminée à l'étape E11. De la sorte, le déplacement digital de cette coupure HDC vient contrebalancer la modification mécanique de l'orientation verticale de la zone d'émission ZE, de sorte que la position de la coupure HDC reste sensiblement identique au cours de cette modification mécanique.

Dans la [Fig.3], le deuxième faisceau d'éclairage pixélisé HD est délimité, dans la zone d'émission ZE, par une coupure HDC présentant une première portion sensiblement plate alignée avec la coupure sensiblement plate FC du premier faisceau d'éclairage et une deuxième portion sensiblement plate positionnée au-dessus de la coupure sensiblement plate, les première et deuxième portions étant reliées par un ressaut, notamment oblique. On constate ainsi, sur les [Fig.4] et [Fig.5], que si la coupure sensiblement FC subit bien une réorientation mécanique, la coupure HDC reste en revanche à la même position, à savoir -0,57°, ce qui permet au faisceau global formé par la réunion des faisceaux d'éclairage F et HD de rester conforme aux exigences réglementaires encadrant la présence d'une coupure supérieure dans un faisceau d'éclairage, y compris pendant cette réorientation mécanique.

D'autre part, la séquence d'images numériques Imⱼ(Fᵢ₋₁,Fᵢ) est générée, par des opérations de morphose et/ou de translation de l'image numérique Im(Fᵢ₋₁) ayant permis la réalisation de la fonction lumineuse Fᵢ₋₁ précédemment émise vers l'image numérique Im(Fᵢ) permettant la réalisation de la nouvelle fonction Fᵢ.

On constate par exemple qu'en [Fig.3], l'image numérique Im(F₁) définit un deuxième faisceau d'éclairage pixélisé HD s'étendant horizontalement seulement partiellement dans la zone d'émission ZE, avec une coupure spécifique HDC, comme expliqué ci-dessus, et comprenant deux bandes horizontales prévues dans la zone d'affichage RW. En [Fig.4], l'image numérique Im(F₂) définit un deuxième faisceau d'éclairage pixélisé HD s'étendant horizontalement totalement dans la zone d'émission ZE, avec la même coupure spécifique HDC, et comprenant trois bandes horizontales prévues dans la zone d'affichage RW. La séquence d'images numériques Imⱼ(F₁,F₂) permettant la transition de la fonction F₁ de la [Fig.3] vers la fonction F₂ de la [Fig.4], est ainsi générée par une opération de morphose et/ou de translation de l'image numérique Im(F₁) ayant permis la réalisation de la fonction lumineuse F₁ précédemment émise vers l'image numérique Im(F₂) permettant la réalisation de la nouvelle fonction F₂.

De même, en [Fig.5], l'image numérique Im(F₃) définit un deuxième faisceau d'éclairage pixélisé HD s'étendant horizontalement totalement dans la zone d'émission ZE, avec une coupure spécifique HDC sensiblement plate, et comprenant deux bandes verticales prévues dans la zone d'affichage RW. La séquence d'images numériques Imⱼ (F₂,F₃) permettant la transition de la fonction F₂ de la [Fig.4] vers la fonction F3 de la [Fig.5], est ainsi générée par une opération de morphose et/ou de translation de l'image numérique Im(F₂) ayant permis la réalisation de la fonction lumineuse F₂ précédemment émise vers l'image numérique Im(F₃) permettant la réalisation de la nouvelle fonction F₃.

Dans une étape E23, chacune des images numériques de la séquence d'images numériques Imⱼ(Fᵢ₋₁,Fᵢ) est transmise au contrôleur intégré de la source lumineuse pixélisé 31, de façon synchrone au contrôle de l'actionneur 42 de l'étape E21, la première image de la séquence étant transmise au début de la modification de l'orientation verticale et la dernière image de la séquence étant transmise à la fin de cette modification de l'orientation verticale. Ainsi, le contrôleur intégré contrôle alors sélectivement chacune des sources lumineuses élémentaires 31_{j,j} pour que le deuxième faisceau d'éclairage pixélisé HD reproduise ainsi chaque image numérique de la séquence d'images numériques Imⱼ(Fᵢ₋₁,Fᵢ) dans la zone d'émission ZE, pendant le déplacement de cette zone d'émission ZE.

La description qui précède explique clairement comment l'invention permet d'atteindre les objectifs qu'elle s'est fixée, et notamment en proposant un système d'éclairage d'un véhicule intégrant un premier module lumineux susceptible d'émettre un faisceau d'éclairage présentant une coupure supérieure plate et un deuxième module lumineux susceptible d'émettre un faisceau d'éclairage pixélisé, l'orientation verticale des deux faisceaux et le faisceau d'éclairage pixélisé étant contrôlés simultanément en fonction du type de fonction lumineuse qu'on souhaite émettre, de sorte qu'il soit possible de régler l'orientation verticale tout en conservant la capacité du système d'éclairage à émettre des fonctions lumineuses réglementaire.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra envisager d'autres types de module lumineux que celui décrit, et en particulier un module lumineux comportant une association d'une source lumineuse et d'une matrice de micro-miroirs activables sélectivement. On pourra également envisager de contrôler le système d'éclairage pour l'émission d'autres fonctions lumineuses que celles qui ont été décrites, et notamment des fonctions d'éclairage de type autoroute ou pour des conditions météorologiques défavorables, ou encore des fonctions lumineuses dans lesquelles d'autres types de pictogramme ou de marquage au sol sont prévues. On pourra également envisager d'agencer les modules sur deux platines différentes munies chacun d'un actionneur de réglage dédié.

## Revendications

1. Système d'éclairage (1) d'un véhicule automobile, comprenant un premier module lumineux (2) apte à émettre un premier faisceau d'éclairage (F) à coupure supérieure (FC), un deuxième module lumineux (3) apte à émettre un deuxième faisceau d'éclairage pixélisé (HD), **caractérisé en ce qu'**il comprend un système de réglage mécanique (42) de l'orientation verticale des premier et deuxième faisceaux lumineux et un contrôleur (5) apte à recevoir une instruction d'émission d'une fonction lumineuse donnée (Fᵢ) et agencé pour contrôler le système de réglage pour entrainer une modification simultanée de l'orientation verticale des premier et deuxième faisceaux d'éclairage en fonction de ladite instruction et pour contrôler le deuxième module lumineux pour émettre un deuxième faisceau d'éclairage pixélisé présentant des caractéristiques prédéterminées en fonction de ladite instruction.

2. Système d'éclairage (1) selon la revendication précédente, dans lequel le premier module lumineux (2) et le deuxième module lumineux (3) sont montés sur une même platine de support (41), le système de réglage mécanique comportant un actionneur (42) relié à ladite platine de support et apte à provoquer un déplacement de la platine support, le contrôleur (5) étant agencé pour contrôler, en fonction de ladite instruction, ledit actionneur pour entrainer un déplacement de la platine entrainant une modification simultanée de l'orientation verticale des premier et deuxième faisceaux d'éclairage (F, HD).

3. Système d'éclairage (1) selon la revendication 1, le système de réglage mécanique comportant un premier actionneur, relié au premier module lumineux (2) et apte à provoquer un déplacement du premier module lumineux, et un deuxième actionneur, relié au deuxième module lumineux (3) et apte à provoquer un déplacement du deuxième module lumineux, le contrôleur (5) étant agencé pour contrôler, en fonction de ladite instruction, les premier et deuxième actionneurs pour entrainer un déplacement simultané des premier et deuxième modules lumineux entrainant une modification simultanée de l'orientation verticale des premier (F) et deuxième faisceaux d'éclairage (F, HD).

4. Système d'éclairage (1) selon l'une des revendications précédentes, dans lequel le contrôleur (5) est agencé pour contrôler, en fonction de ladite instruction, le premier module lumineux (2) pour modifier l'intensité lumineuse du premier faisceau d'éclairage (F) selon une consigne prédéterminée (Iᵢ) en fonction de ladite instruction.

5. Système d'éclairage (1) selon l'une des revendications précédentes, dans lequel le deuxième module lumineux (3) est apte à émettre un deuxième faisceau d'éclairage pixélisé (HD) dans une zone d'émission (ZE), et dans lequel le contrôleur (5) est agencé pour contrôler, en fonction de ladite instruction, le deuxième module lumineux pour émettre un faisceau d'éclairage pixélisé dont le profil, la photométrie et/ou la position dans la zone d'émission est prédéterminé en fonction de ladite instruction.

6. Système d'éclairage (1) selon la revendication précédente, dans lequel le contrôleur (5) est apte à recevoir sélectivement au moins une instruction d'émission d'un faisceau d'éclairage de type route non éblouissant (F₁), une instruction d'émission d'un faisceau d'éclairage de type croisement (F₂) et une instruction d'émission d'un faisceau d'éclairage de type urbain (F₃), et dans lequel :
a. Lors de la réception d'une instruction d'émission d'un faisceau d'éclairage de type route non éblouissant, le contrôleur est agencé pour contrôler le système de réglage (42) pour entrainer une modification simultanée de l'orientation verticale des premier et deuxième faisceaux d'éclairage, de sorte que la coupure supérieure (FC) du premier faisceau d'éclairage (F) soit positionnée sensiblement selon un angle de -0,57° par rapport à une ligne d'horizon (H-H) ;
b. Lors de la réception d'une instruction d'émission d'un faisceau d'éclairage de type croisement, le contrôleur est agencé pour contrôler le système de réglage pour entrainer une modification simultanée de l'orientation verticale des premier et deuxième faisceaux d'éclairage, de sorte que la coupure supérieure du premier faisceau d'éclairage soit positionnée sensiblement selon un angle de -1,57° par rapport à une ligne d'horizon ;
c. Lors de la réception d'une instruction d'émission d'un faisceau d'éclairage de type urbain, le contrôleur est agencé pour contrôler le système de réglage pour entrainer une modification simultanée de l'orientation verticale des premier et deuxième faisceaux d'éclairage, de sorte que la coupure supérieure du premier faisceau d'éclairage soit positionnée sensiblement selon un angle de -2,57° par rapport à une ligne d'horizon.

7. Système d'éclairage (1) selon l'une des revendications, dans lequel, lorsque le contrôleur (5) contrôle le deuxième module lumineux (3) pour l'émission d'un deuxième faisceau d'éclairage pixélisé (HD), dit initial, présentant une coupure supérieure (HDC) et reçoit une instruction d'émission d'une nouvelle fonction lumineuse donnée (Fᵢ), le contrôleur est agencé pour contrôler le deuxième module lumineux pour l'émission d'un deuxième faisceau d'éclairage pixélisé présentant une coupure supérieure dont la position reste constante et identique à celle du deuxième faisceau d'éclairage pixélisé initial pendant qu'il contrôle le système de réglage (42) pour entrainer une modification simultanée de l'orientation verticale des premier et deuxième faisceaux d'éclairage (F, HD) en fonction de ladite instruction.

8. Système d'éclairage (1) selon l'une des revendications précédentes, dans lequel, lorsque le contrôleur (5) contrôle le deuxième module lumineux (3) pour l'émission d'un deuxième faisceau d'éclairage pixélisé (HD), dit initial, et reçoit une instruction d'émission d'une nouvelle fonction lumineuse donnée (Fᵢ), le contrôleur est agencé pour contrôler le deuxième module lumineux pour l'émission d'un deuxième faisceau d'éclairage pixélisé à partir d'une image numérique (Imⱼ(Fᵢ₋₁, Fᵢ) obtenue par une morphose et/ou une translation d'une image numérique (Im(Fᵢ₋₁ )) correspondant au deuxième faisceau d'éclairage pixélisé initial, pendant qu'il contrôle le système de réglage (42) pour entrainer une modification simultanée de l'orientation verticale des premier et deuxième faisceaux d'éclairage en fonction de ladite instruction.

9. Système d'éclairage (1) selon l'une des revendications précédentes, dans lequel, lors de la réception d'une instruction d'émission d'une fonction lumineuse donnée (Fᵢ), le contrôleur est agencé pour contrôler ,en fonction de ladite instruction, le système de réglage (42) pour entrainer une modification simultanée de l'orientation verticale des premier et deuxième faisceaux d'éclairage (F, HD) selon une loi de commande (L(θ)) présentant une vitesse variable.

10. Procédé de contrôle d'un système d'éclairage (1) selon l'une des revendications précédentes, le procédé comportant les étapes suivantes :
a. (E1) Réception d'une instruction d'émission d'une fonction lumineuse donnée (Fᵢ) :
b. (E21) Contrôle du système de réglage (42) pour entrainer une modification simultanée de l'orientation verticale des premier et deuxième faisceaux d'éclairage (F, HD) en fonction de ladite instruction ;
c. (E23) Contrôle du deuxième module lumineux (3) pour émettre un deuxième faisceau d'éclairage pixélisé présentant des caractéristiques prédéterminées en fonction de ladite instruction.

## Patentansprüche

1. Beleuchtungssystem (1) für ein Kraftfahrzeug, umfassend ein erstes Beleuchtungsmodul (2), das einen ersten Beleuchtungsstrahl (F) mit oberer Hell-Dunkel-Grenze (FC) aussenden kann, ein zweites Beleuchtungsmodul (3), das einen zweiten pixelierten Beleuchtungsstrahl (HD) aussenden kann, **dadurch gekennzeichnet, dass** es ein mechanisches Einstellsystem (42) für die vertikale Ausrichtung des ersten und zweiten Lichtstrahls und eine Steuerung (5) umfasst, die eine Anweisung zur Emission einer bestimmten Lichtfunktion (FI) empfangen kann und so angeordnet ist, dass sie das Einstellsystem steuert, um eine gleichzeitige Änderung der vertikalen Ausrichtung des ersten und zweiten Beleuchtungsstrahls gemäß dieser Anweisung zu bewirken, und das zweite Beleuchtungsmodul steuert, um einen pixelierten zweiten Beleuchtungsstrahl mit vorbestimmten Eigenschaften gemäß dieser Anweisung auszusenden.

2. Beleuchtungssystem (1) nach dem vorhergehenden Anspruch, bei dem das erste Beleuchtungsmodul (2) und das zweite Beleuchtungsmodul (3) auf derselben Trägerplatte (41) montiert sind, wobei das mechanische Einstellsystem einen Aktuator (42) umfasst, der mit der Trägerplatte verbunden ist und eine Bewegung der Trägerplatte bewirken kann, wobei die Steuerung (5) so angeordnet ist, dass sie gemäß der Anweisung den Aktuator steuert, um eine Bewegung der Platte zu bewirken, die eine gleichzeitige Änderung der vertikalen Ausrichtung des ersten und zweiten Beleuchtungsstrahls (F, HD) verursacht.

3. Beleuchtungssystem (1) nach Anspruch 1, wobei das mechanische Einstellsystem einen ersten Aktuator, der mit dem ersten Beleuchtungsmodul (2) verbunden ist und eine Bewegung des ersten Beleuchtungsmoduls bewirken kann, und einen zweiten Aktuator umfasst, der mit dem zweiten Beleuchtungsmodul (3) verbunden ist und eine Bewegung des zweiten Beleuchtungsmoduls bewirken kann, wobei die Steuerung (5) so angeordnet ist, dass sie gemäß der Anweisung den ersten und zweiten Aktuator steuert, um eine gleichzeitige Bewegung des ersten und zweiten Beleuchtungsmoduls zu bewirken, die eine gleichzeitige Änderung der vertikalen Ausrichtung des ersten (F) und zweiten Beleuchtungsstrahls (F, HD) verursacht.

4. Beleuchtungssystem (1) nach einem der vorhergehenden Ansprüche, bei dem die Steuerung (5) so angeordnet ist, dass sie gemäß der Anweisung das erste Beleuchtungsmodul (2) steuert, um die Lichtintensität des ersten Beleuchtungsstrahls (F) gemäß einem vorbestimmten Sollwert (li) entsprechend der Anweisung zu ändern.

5. Beleuchtungssystem (1) nach einem der vorhergehenden Ansprüche, bei dem das zweite Beleuchtungsmodul (3) einen zweiten pixelierten Beleuchtungsstrahl (HD) in einer Emissionszone (ZE) aussenden kann, und bei dem die Steuerung (5) so angeordnet ist, dass sie gemäß der Anweisung das zweite Beleuchtungsmodul steuert, um einen pixelierten Beleuchtungsstrahl auszusenden, dessen Profil, Photometrie und/oder Position in der Emissionszone gemäß der Anweisung vorbestimmt ist.

6. Beleuchtungssystem (1) nach dem vorhergehenden Anspruch, bei dem die Steuerung (5) selektiv mindestens eine Anweisung zur Emission eines nicht blendenden Fernlichttyps (F1), eine Anweisung zur Emission eines Abblendlichttyps (F2) und eine Anweisung zur Emission eines Stadtlichttyps (F3) empfangen kann, und bei dem:
a. Bei Empfang einer Anweisung zur Emission eines nicht blendenden Fernlichttyps ist die Steuerung so angeordnet, dass sie das Einstellsystem (42) steuert, um eine gleichzeitige Änderung der vertikalen Ausrichtung des ersten und zweiten Beleuchtungsstrahls zu bewirken, so dass die obere Abgrenzung (FC) des ersten Beleuchtungsstrahls (F) im Wesentlichen in einem Winkel von -0,57° zu einer Horizontlinie (H-H) positioniert ist;
b. Bei Empfang einer Anweisung zur Emission eines Abblendlichttyps ist die Steuerung so angeordnet, dass sie das Einstellsystem steuert, um eine gleichzeitige Änderung der vertikalen Ausrichtung des ersten und zweiten Beleuchtungsstrahls zu bewirken, so dass die obere Abgrenzung des ersten Beleuchtungsstrahls im Wesentlichen in einem Winkel von -1,57° zu einer Horizontlinie positioniert ist;
c. Bei Empfang einer Anweisung zur Emission eines Stadtlichttyps ist die Steuerung so angeordnet, dass sie das Einstellsystem steuert, um eine gleichzeitige Änderung der vertikalen Ausrichtung des ersten und zweiten Beleuchtungsstrahls zu bewirken, so dass die obere Abgrenzung des ersten Beleuchtungsstrahls im Wesentlichen in einem Winkel von -2,57° zu einer Horizontlinie positioniert ist.

7. Beleuchtungssystem (1) nach einem der Ansprüche, bei dem, wenn die Steuerung (5) das zweite Beleuchtungsmodul (3) für die Emission eines zweiten pixelierten Beleuchtungsstrahls (HD), genannt initial, mit einer oberen Abgrenzung (HDC) steuert und eine Anweisung zur Emission einer neuen bestimmten Lichtfunktion (Fi) empfängt, die Steuerung so angeordnet ist, dass sie das zweite Beleuchtungsmodul für die Emission eines zweiten pixelierten Beleuchtungsstrahls steuert, der eine obere Abgrenzung aufweist, deren Position konstant und identisch mit der des initialen zweiten pixelierten Beleuchtungsstrahls bleibt, während sie das Einstellsystem (42) steuert, um eine gleichzeitige Änderung der vertikalen Ausrichtung des ersten und zweiten Beleuchtungsstrahls (F, HD) gemäß der Anweisung zu bewirken.

8. Beleuchtungssystem (1) nach einem der vorhergehenden Ansprüche, bei dem, wenn die Steuerung (5) das zweite Beleuchtungsmodul (3) für die Emission eines zweiten pixelierten Beleuchtungsstrahls (HD), genannt initial, steuert und eine Anweisung zur Emission einer neuen bestimmten Lichtfunktion (Fi) empfängt, die Steuerung so angeordnet ist, dass sie das zweite Beleuchtungsmodul für die Emission eines zweiten pixelierten Beleuchtungsstrahls aus einem digitalen Bild (ImJ(Fi-1, Fi) steuert, das durch eine Morphose und/oder eine Translation eines digitalen Bildes (Im(Fi-1)) erhalten wird, das dem initialen zweiten pixelierten Beleuchtungsstrahl entspricht, während sie das Einstellsystem (42) steuert, um eine gleichzeitige Änderung der vertikalen Ausrichtung des ersten und zweiten Beleuchtungsstrahls gemäß der Anweisung zu bewirken.

9. Beleuchtungssystem (1) nach einem der vorhergehenden Ansprüche, bei dem bei Empfang einer Anweisung zur Emission einer bestimmten Lichtfunktion (Fi) die Steuerung so angeordnet ist, dass sie gemäß der Anweisung das Einstellsystem (42) steuert, um eine gleichzeitige Änderung der vertikalen Ausrichtung des ersten und zweiten Beleuchtungsstrahls (F, HD) gemäß einem Steuergesetz (L(O)) mit variabler Geschwindigkeit zu bewirken.

10. Verfahren zur Steuerung eines Beleuchtungssystems (1) nach einem der vorhergehenden Ansprüche, wobei das Verfahren die folgenden Schritte umfasst:
a. (E1) Empfangen einer Anweisung zur Emission einer bestimmten Lichtfunktion (Fi);
b. (E21) Steuern des Einstellsystems (42), um eine gleichzeitige Änderung der vertikalen Ausrichtung des ersten und zweiten Beleuchtungsstrahls (F, HD) gemäß der Anweisung zu bewirken;
c. (E23) Steuern des zweiten Beleuchtungsmoduls (3), um einen zweiten pixelierten Beleuchtungsstrahl mit vorbestimmten Eigenschaften gemäß der Anweisung auszusenden.

## Claims

1. Lighting system (1) for a motor vehicle, comprising a first lighting module (2) capable of emitting a first lighting beam (F) with an upper cut-off (FC), a second lighting module (3) capable of emitting a second pixelated lighting beam (HD), **characterized in that** it comprises a mechanical adjustment system (42) for the vertical orientation of the first and second light beams and a controller (5) capable of receiving an instruction to emit a given light function (Fl) and arranged to control the adjustment system to cause a simultaneous modification of the vertical orientation of the first and second lighting beams according to said instruction and to control the second lighting module to emit a pixelated second lighting beam having predetermined characteristics according to said instruction.

2. Lighting system (1) according to the preceding claim, in which the first lighting module (2) and the second lighting module (3) are mounted on the same support plate (41), the mechanical adjustment system comprising an actuator (42) connected to said support plate and capable of causing a movement of the support plate, the controller (5) being arranged to control, according to said instruction, said actuator to cause a movement of the plate causing a simultaneous modification of the vertical orientation of the first and second lighting beams (F, HD).

3. Lighting system (1) according to claim 1, the mechanical adjustment system comprising a first actuator, connected to the first lighting module (2) and capable of causing a movement of the first lighting module, and a second actuator, connected to the second lighting module (3) and capable of causing a movement of the second lighting module, the controller (5) being arranged to control, according to said instruction, the first and second actuators to cause a simultaneous movement of the first and second lighting modules causing a simultaneous modification of the vertical orientation of the first (F) and second lighting beams (F, HD).

4. Lighting system (1) according to one of the preceding claims, in which the controller (5) is arranged to control, according to said instruction, the first lighting module (2) to modify the light intensity of the first lighting beam (F) according to a predetermined setpoint (li) according to said instruction.

5. Lighting system (1) according to one of the preceding claims, in which the second lighting module (3) is capable of emitting a second pixelated lighting beam (HD) in an emission zone (ZE), and in which the controller (5) is arranged to control, according to said instruction, the second lighting module to emit a pixelated lighting beam whose profile, photometry and/or position in the emission zone is predetermined according to said instruction.

6. Lighting system (1) according to the preceding claim, in which the controller (5) is capable of selectively receiving at least one instruction for emitting a non-dazzling high beam type lighting beam (F1), an instruction for emitting a low beam type lighting beam (F2) and an instruction for emitting an urban type lighting beam (F3), and in which:
a. Upon receipt of an instruction to emit a non-dazzling high beam type lighting beam, the controller is arranged to control the adjustment system (42) to cause a simultaneous modification of the vertical orientation of the first and second lighting beams, so that the upper cut-off (FC) of the first lighting beam (F) is positioned substantially at an angle of -0.57° with respect to a horizon line (H-H);
b. Upon receipt of an instruction to emit a low beam type lighting beam, the controller is arranged to control the adjustment system to cause a simultaneous modification of the vertical orientation of the first and second lighting beams, so that the upper cut-off of the first lighting beam is positioned substantially at an angle of -1.57° with respect to a horizon line;
c. Upon receipt of an instruction to emit an urban type lighting beam, the controller is arranged to control the adjustment system to cause a simultaneous modification of the vertical orientation of the first and second lighting beams, so that the upper cut-off of the first lighting beam is positioned substantially at an angle of -2.57° with respect to a horizon line.

7. Lighting system (1) according to one of the claims, in which, when the controller (5) controls the second lighting module (3) for the emission of a second pixelated lighting beam (HD), said initial, having an upper cut-off (HDC) and receives an instruction to emit a new given light function (Fi), the controller is arranged to control the second lighting module for the emission of a second pixelated lighting beam having an upper cut-off whose position remains constant and identical to that of the initial second pixelated lighting beam while it controls the adjustment system (42) to cause a simultaneous modification of the vertical orientation of the first and second lighting beams (F, HD) according to said instruction.

8. Lighting system (1) according to one of the preceding claims, in which, when the controller (5) controls the second lighting module (3) for the emission of a second pixelated lighting beam (HD), said initial, and receives an instruction to emit a new given light function (Fi), the controller is arranged to control the second lighting module for the emission of a second pixelated lighting beam from a digital image (ImJ(Fi-1, Fi) obtained by a morphing and/or a translation of a digital image (Im(Fi-1)) corresponding to the initial second pixelated lighting beam, while it controls the adjustment system (42) to cause a simultaneous modification of the vertical orientation of the first and second lighting beams according to said instruction.

9. Lighting system (1) according to one of the preceding claims, in which, upon receipt of an instruction to emit a given light function (Fi), the controller is arranged to control, according to said instruction, the adjustment system (42) to cause a simultaneous modification of the vertical orientation of the first and second lighting beams (F, HD) according to a control law (L(O)) having a variable speed.

10. Method for controlling a lighting system (1) according to one of the preceding claims, the method comprising the following steps:
a. (E1) Receiving an instruction to emit a given light function (Fi);
b. (E21) Controlling the adjustment system (42) to cause a simultaneous modification of the vertical orientation of the first and second lighting beams (F, HD) according to said instruction;
c. (E23) Controlling the second lighting module (3) to emit a second pixelated lighting beam having predetermined characteristics according to said instruction.
